(19)

Europäisches
Patentamt
European
Patent Office
Office européen
des brevets

(11) **EP 2 242 132 A1**

(12) **EUROPEAN PATENT APPLICATION**
published in accordance with Art. 153(4) EPC

(43) Date of publication:
**20.10.2010 Bulletin 2010/42**

(21) Application number: **09709263.9**

(22) Date of filing: **03.02.2009**

(51) Int Cl.:
**H01M 4/50** (2010.01)   **H01M 2/16** (2006.01)
**H01M 4/52** (2010.01)   **H01M 10/40** (0000.00)

(86) International application number:
**PCT/JP2009/051799**

(87) International publication number:
**WO 2009/099068 (13.08.2009 Gazette 2009/33)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **04.02.2008 JP 2008023673
06.02.2008 JP 2008026153
06.02.2008 JP 2008026154
18.02.2008 JP 2008035578**

(71) Applicant: **Sumitomo Chemical Company, Limited
Tokyo 104-8260 (JP)**

(72) Inventors:
• **KUZE, Satoru
Tsukuba-shi
Ibaraki 305-0045 (JP)**
• **MAKIDERA, Masami
Tsukuba-shi
Ibaraki 305-0047 (JP)**
• **YAMAMOTO, Taketsugu
Tsukuba-shi
Ibaraki 305-0045 (JP)**

(74) Representative: **Hart-Davis, Jason et al
Cabinet Beau de Loménie
158, rue de l'Université
75340 Paris Cedex 07 (FR)**

(54) **SODIUM RECHARGEABLE BATTERY**

(57)   The present invention provides a sodium secondary battery having a superior cycling performance as compared with conventional techniques. A sodium secondary battery of the present invention comprises a positive electrode comprising a mixed metal oxide which comprises Na and $M^1$ wherein $M^1$ represents two or more elements selected from the group consisting of Mn, Fe, Co and Ni, with an $Na:M^1$ molar ratio being a:1 wherein a is a value falling within the range of more than 0.5 and less than 1, a negative electrode comprising a carbonaceous material capable of storing and releasing Na ions, and an electrolyte. Further, the sodium secondary battery of the present invention may comprise a separator, and the separator may be a separator comprising a porous laminated film in which a heat-resistant porous layer comprising a heat-resistant resin and a porous film comprising a thermoplastic resin are stacked each other.

Fig.1

EP 2 242 132 A1

**Description**

TECHNICAL FIELD

The present invention relates to a sodium secondary battery.

BACKGROUND ART

The sodium secondary battery is a secondary battery comprising a positive electrode and a negative electrode. A lithium secondary battery is a representative example as a secondary battery, and has already been put into commercial use as a small power source for cellular phones, notebook computers and the like. Furthermore, because of its applicability as a large power source, for example, as a power source for vehicles such as electric vehicle and hybrid electric vehicle or as a power source for distributed power storages, the demand thereof is on the rise. However, in a lithium secondary battery, a large amount of scarce metal elements such as lithium are contained in the mixed metal oxide constituting the positive electrode, and there is concern about supply of the raw material to meet the growing demand for a large power source.

In response, a sodium secondary battery is being studied as a secondary battery capable of eliminating the concern about supply. The sodium secondary battery can be fabricated using a material which has a plentiful supply and which is inexpensive, and its commercial application is expected to allow for a large supply of large power sources.

In Patent Document 1, a secondary battery comprising a positive electrode using a mixed metal oxide obtained by calcining a raw material comprising Na, Mn and Co in a compositional ratio (Na:Mn:Co) of 0.7:0.5:0.5, and a negative electrode composed of sodium metal is specifically described as the sodium secondary battery.

Patent Document 1: Japanese Unexamined Patent Publication No. 2007-287661 (Example 1)

DISCLOSURE OF THE INVENTION

PROBLEMS TO BE SOLVED BY THE INVENTION

The conventional sodium secondary battery is not sufficient in view of cycling performance of the secondary battery, i.e., the discharge capacity maintenance rate when having repeated a charge and discharge. An object of the present invention is to provide a sodium secondary battery superior in cycling performance as compared with conventional techniques.

MEANS TO SOLVE THE PROBLEMS

The present inventors have continued intensive studies to attain the above-described object and accomplished the present invention. That is, the present invention provides the following inventions.

<1> A sodium secondary battery comprising:

a positive electrode comprising a mixed metal oxide which comprises Na and $M^1$ wherein $M^1$ represents two or more elements selected from the group consisting of Mn, Fe, Co and Ni, with an Na:$M^1$ molar ratio being a:1 wherein a is a value falling within the range of more than 0.5 and less than 1,
a negative electrode comprising a carbonaceous material capable of storing and releasing Na ions, and
an electrolyte.

<2> The sodium secondary battery as described in <1> above further comprising a separator.
<3> The sodium secondary battery as described in <2> above, wherein the separator is a separator comprising a porous laminated film in which a heat-resistant porous layer comprising a heat-resistant resin and a porous film comprising a thermoplastic resin are stacked each other.
<4> The sodium secondary battery as described in any one of <1> to <3> above, wherein the mixed metal oxide is represented by the following formula (1):

$$Na_aM^1O_2 \qquad (1)$$

wherein $M^1$ and a each have the same meaning as above.
<5> The sodium secondary battery as described in any one of <1> to <4> above, wherein $M^1$ comprises at least Mn.
<6> The sodium secondary battery as described in any one of <1> to <5> above, wherein $M^1$ represents Mn and Co.

<7> The sodium secondary battery as described in any one of <1> to <6> above, wherein a is a value falling within the range of 0.6 to 0.9.

EFFECTS OF THE INVENTION

According to the present invention, a sodium secondary battery capable of reducing the amount of lithium used, and moreover ensuring a larger discharge capacity maintenance rate when having repeated a charge and discharge and superior cycling performance of the secondary battery as compared with conventional techniques can be provided. The present invention is very useful in industry.

BRIEF DESCRIPTION OF THE

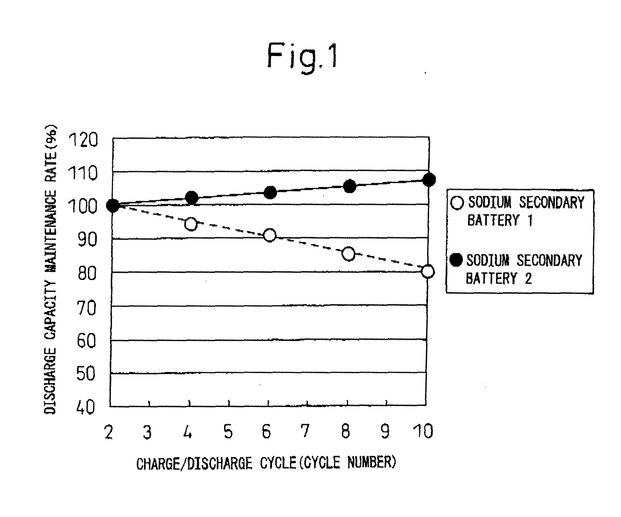

[Fig. 1] A view showing the discharge capacity maintenance rate for each cycle at the charging and discharging test of a sodium secondary battery (Comparative Example 1, Example 1).

BEST MODE FOR CARRYING OUT THE INVENTION

<Sodium Secondary Battery of the Present Invention>

The sodium secondary battery of the present invention is characterized by comprising a positive electrode comprising a mixed metal oxide which comprises Na and $M^1$ wherein $M^1$ represents two or more elements selected from the group consisting of Mn, Fe, Co and Ni with an Na:$M^1$ molar ratio being a:1 wherein a is a value falling within the range of more than 0.5 and less than 1, a negative electrode comprising a carbonaceous material capable of storing and releasing Na ions, and an electrolyte.

<Positive Electrode>

In the present invention, the mixed metal oxide constituting the positive electrode comprises Na and $M^1$ wherein $M^1$ represents two or more elements selected from the group consisting of Mn, Fe, Co and Ni, and the Na:$M^1$ molar ratio is a:1 wherein a is a value falling within the range of more than 0.5 and less than 1. The mixed metal oxide includes a mixed metal oxide represented by the following formula (1):

$$Na_a M^1 O_2 \qquad (1)$$

wherein $M^1$ and a each have the same meaning as above.

In the present invention, from the standpoint of increasing the capacity of the sodium secondary battery, $M^1$ preferably comprises at least Mn, and $M^1$ is mote preferably Mn and Co. When M1 represents Mn and Co, the Mn:Co molar ratio can be 0.5:0.5, and from the standpoint of more elevating the average discharge voltage of the sodium secondary battery and increasing the energy density of the battery, the proportion of Mn is preferably larger than the above (for example, the ratio of Mn (mol) is preferably from 0.6 to 0.9 based on Mn and Co (mol)). An embodiment where $M^1$ represents Mn, Fe and Ni is also preferred. In this case, the preferred composition of Mn:Fe:Ni (molar ratio) is 1:(0.3 to 3):(0.01 to 2), more preferably 1:(0.5 to 2):(0.1 to 1.2).

In the present invention, a is a value falling within the range of preferably from 0.6 to 0.9, more preferably a value falling within the range of from 0.7 to 0.9, still more preferably about 0.8, that is, a value falling within the range of from 0.75 to 0.84 in view of more increasing the capacity of the sodium secondary battery.

In the mixed metal oxide, a part of $M^1$ may be substituted with a metal element other than $M^1$. By this substitution, the battery characteristics of the sodium secondary battery are enhanced in some cases.

<Production Method of Mixed Metal Oxide>

In the present invention, the mixed metal oxide can be produced by calcining a metal-containing compound mixture which has a composition capable of giving the mixed metal oxide in the present invention after calcination. More specifically, metal-containing compounds comprising corresponding metal elements are weighed to obtain a predetermined composition and mixed, and the obtained mixture is calcined, whereby the mixed metal oxide can be produced. For example, a mixed metal oxide having a metal element ratio represented by Na:Mn:Co = 0.7:0.7:0.3, that is one of preferred metal element ratios, can be produced by weighing raw materials of $Na_2CO_3$, $MnO_2$ and $Co_3O_4$ to give an Na:

Mn:Co molar ratio of 0.7:0.7:0.3, mixing these raw materials, and calcining the obtained mixture.

As the metal-containing compound usable to produce the mixed metal oxide, an oxide, or a compound capable of becoming an oxide when decomposed and/or oxidized at a high temperature, such as hydroxide, carbonate, nitrate, halide and oxalate, can be used. The sodium compound is preferably $Na_2CO_3$, $NaHCO_3$ or $Na_2O_2$, and in view of handleability, more preferably $Na_2CO_3$. The manganese compound is preferably $MnO_2$, the iron compound is preferably $Fe_3O_4$, the nickel compound is preferably NiO, and the cobalt compound is preferably $Co_3O_4$. These metal-containing compounds may be a hydrate.

In the mixing of metal-containing compounds, an apparatus usually used in industry, such as ball mill, V-type mixer and stirrer, can be used. The mixing may be either dry mixing or wet mixing. A mixture of metal-containing compound, which has a predetermined composition, may be obtained also by a precipitation method.

The mixture of the above-described metal-containing compounds is calcined, for example, by keeping it at a temperature in the range of from 600°C to 1,600°C over 0.5 hours to 100 hours, whereby the mixed metal oxide of the present invention is obtained. For example, the calcination temperature range is preferably from 600°C to 900°C, more preferably from 650°C to 850°C. In the case where a compound capable of decomposing and/or oxidizing at a high temperature, such as hydroxide, carbonate, nitrate, halide and oxalate, is used in the mixture of metal-containing compounds, the above-described calcination may also be carried out after preliminarily calcining the mixture by keeping it at a temperature in the range of from 400°C to 1,600°C. to convert the compound into an oxide or to remove crystal water. The atmosphere in which the preliminary calcination is carried out may be an inert gas atmosphere, an oxidizing atmosphere or a reducing atmosphere. After the preliminary calcination, pulverization may also be carried out.

The atmosphere in the calcination may be any of, for example, an inert atmosphere such as nitrogen atmosphere and argon atmosphere; an oxidizing atmosphere such as air atmosphere, oxygen atmosphere, oxygen-containing nitrogen atmosphere, and oxygen-containing argon atmosphere; and a reducing atmosphere such as hydrogen-containing nitrogen atmosphere comprising from 0.1 vol% to 10 vol% of hydrogen, and hydrogen-containing argon atmosphere comprising from 0.1 vol% to 10 vol% of hydrogen. In order to calcine the mixture in a strongly reducing atmosphere, the calcination may be carried out after incorporating an appropriate amount of carbon into the mixture of metal-containing compounds. Preferably, the calcination is carried out in an oxidizing atmosphere such as air atmosphere.

By using a halide such as fluoride or chloride in an appropriate amount as the metal-containing compound, the crystallinity of the mixed metal oxide produced, and the average particle diameter of particles constituting the mixed metal oxide can be controlled. In this case, the halide sometimes plays a role as the reaction accelerator (flux). Examples of the flux include NaF, $MnF_3$, $FeF_2$, $NiF_2$, $CoF_2$, NaCl, $MnCl_2$, $FeCl_2$, $FeCl_3$, $NiCl_2$, $CoCl_2$, $Na_2CO_3$, $NaHCO_3$, $NH_4Cl$, $NH_4I$, $B_2O_3$ and $H_3BO_3$. These can be used as a raw material (metal-containing compound) of the mixture, or can be used to be added in an appropriate amount to the mixture. Also, such a flux may be a hydrate.

It is sometimes preferred to adjust the particle size by optionally subjecting the mixed metal oxide obtained as above to, for example, pulverization by means of a ball mill, a jet mill or the like, washing and classification. Also, calcination may be carried out two or more times. The particle of the mixed metal oxide may be surface-treated, for example, by coating the surface with an inorganic substance comprising Si, Al, Ti, Y or the like. The crystal structure of the mixed metal oxide is preferably not a tunnel structure.

The mixed metal oxide obtained as above can be used for the positive electrode, solely or after applying a surface treatment such as coating.

<Production Method of Positive Electrode>

In the present invention a positive electrode comprises the mixed metal oxide above. The positive electrode can be produced by loading, on a positive electrode current collector, a positive electrode mixture comprising the mixed metal oxide above, an electrically conductive material and a binder.

Examples of the electrically conductive material include a carbonaceous material, such as natural graphite, artificial graphite, coke, and carbon black. Examples of the binder include a thermoplastic resin, and specific examples thereof include a fluororesin, such as polyvinylidene fluoride (hereinafter referred to as "PVDF"), polytetrafluoroethylene, ethylene tetrafluoride-propylene hexafluoride-vinylidene fluoride-based copolymer, propylene hexafluoride-vinylidene fluoride-based copolymer, and ethylene tetrafluoride-perfluorovinyl ether-based copolymer; and a polyolefin resin, such as polyethylene and polypropylene. Examples of the positive electrode current collector include Al, Ni and stainless steel.

The method for loading a positive electrode mixture on a positive electrode current collector includes a method of pressure-molding the mixture, and a method of forming the positive electrode mixture into a paste by using an organic solvent or the like, applying and drying the paste on a positive electrode current collector, and fixing the mixture by pressing or the like. In the case of forming a paste, a slurry comprising a positive electrode active material, an electrically conductive material, a binder and an organic solvent is prepared. Examples of the organic solvent include an amine-based solvent, such as N,N-dimethylaminopropylamine and diethyltriamine; an ether-based solvent, such as ethylene oxide and tetrahydrofuran; a ketone-based solvent, such as methyl ethyl ketone; an ester-based solvent, such as methyl acetate; and an aprotic polar solvent, such as dimethylacetamide and N-methyl-2-pyrrolidone. Examples of the method for applying a positive electrode mixture on a positive electrode current collector include a slit die coating method, a screen coating method, a curtain coating method, a knife coating method, a gravure coating method, and an electrostatic spraying method.

<Negative Electrode>

In the present invention, a carbonaceous material constituting a negative electrode is a carbonaceous material capable of storing and releasing Na ions. In the present invention, any carbonaceous material capable of storing and releasing Na ions can be used. The carbonaceous material includes a carbonaceous material capable of storing and releasing Na ions among a carbonaceous material such as natural graphite, artificial graphite, coke, carbon black, pyrolytic carbons, carbon fiber and calcined organic polymer compound. A specific example of the carbonaceous material includes those described in Japanese Unexamined Patent Publication No. 2007-039313. The shape of the carbonaceous material may be any of a flake, such as that of natural graphite, a sphere, such as that of mesocarbon microbead, a fiber, such as that of graphitized carbon fiber, or an aggregate of fine powder. The carbonaceous material may also work as an electrically conductive material.

<Production Method of Negative Electrode>

A negative electrode can be produced by loading, on a negative electrode current collector, a negative electrode mixture comprising the carbonaceous material above. The negative electrode mixture may comprise a binder and an electrically conductive material, if necessary. Accordingly, the negative electrode may comprise a mixture of a carbonaceous material and a binder. The binder includes a thermoplastic resin, and specific example thereof include PVDF, thermoplastic polyimide, carboxymethyl cellulose, polyethylene and polypropylene.

Examples of the negative electrode current collector include Cu, Ni and stainless steel, and Cu is preferred because Cu is difficult to be an alloy with sodium, and is easily formed into a thin film. Examples of the method for loading a negative electrode mixture on a negative electrode current collector are the same as in the case of a positive electrode, and include a method of pressure-molding the mixture, and a method of forming the negative electrode mixture into a paste by using a solvent or the like, applying and drying the paste on a negative electrode current collector, and fixing the mixture by pressing or the like.

<Electrolyte>

In the present invention, the examples of the electrolyte include $NaClO_4$, $NaPF_5$, $NeAsF_6$, $NaSbF_6$, $NaBF_4$, $NaCF_3SO_3$, $NaN(SO_2CF_3)_2$, sodium salt of lower aliphatic carboxylate, and $NaAlCl_4$. A mixture of two or more thereof may be used. Among these, an electrolyte comprising at least one selected from the group consisting of $NaPF_6$, $NaAsF_6$, $NaSbF_6$, $NaBF_4$, $NaCF_3SO_3$ and $NaN(SO_2CF_3)_2$, which comprise fluorine, is preferably used. In the present invention, the above electrolyte is usually dissolved in an organic solvent and used in the form of an electrolytic solution in the case of using the above electrolyte.

Examples of the organic solvent, which can be used, include carbonates, such as propylene carbonate, ethylene carbonate, dimethyl carbonate, diethyl carbonate, ethyl methyl carbonate, isopropyl methyl carbonate, vinylene carbonate, 4-trifluoromethyl-1,3-dioxolan-2-one, and 1,2-di(methoxycarbonyloxy)ethane; ethers, such as 1,2-dimethoxyethane, 1,3-dimethoxypropane, pentafluoropropylmethyl ether, 2,2,3,3-tetrafluoropropyldifluoromethyl ether, tetrahydrofuran, and 2-methyltetrahydrofuran; esters, such as methyl formate, methyl acetate, and γ-butyrolactone; nitrites, such as acetonitrile and butyronitrile; amides, such as N,N-dimethylformamide, and N,N-dimethylacetamide; carbamates, such as 3-methyl-2-oxazolidone; sulfur-containing compounds, such as sulfolane, dimethyl sulfoxide, and 1,3-propanesultone; and those obtained by introducing a fluorine substituent into the organic solvent above. Usually, two or more of the organic solvents are mixed and used.

A solid electrolyte may also be used as the electrolyte. Examples of the solid electrolyte which can be used include an organic solid electrolyte, such as polyethylene oxide-based polymer, and polymer comprising at least one or more of polyorganosiloxane chains or polyoxyalkylene chains. A so-called gel-type electrolyte holding a nonaqueous electrolyte solution in a polymer can also be used. An inorganic solid electrolyte such as $Na_2S$-$SiS_2$, $Na_2S$-$GeS_2$, $NaTi_2(PO_4)_3$, $NaFe_2(PO_4)_3$, $Na_2(SO_4)_3$, $Fe_2(SO_4)_2(PO_4)$ and $Fe_2(MoO_4)_3$ may also be used. When such a solid electrolyte is used, safety of a sodium secondary battery can be enhanced in some cases. In the case of using a solid electrolyte in the sodium secondary battery of the present invention, the solid electrolyte sometimes works as a separator, and in this case, a separator may not be necessary.

<Separator>

A sodium secondary battery of the present invention preferably further has a separator. As a separator, a member having a form, such as porous film, nonwoven fabric and woven fabric, and made of a material of a polyolefin resin, such as polyethylene and polypropylene, a fluororesin or a nitrogen-containing aromatic polymer can be used. A single-layer or multilayer separator using two or more of these materials may also be used. Examples of the separator include separators described in Japanese Unexamined Patent Publication Nos. 2000-30686 and 10-324758. A thickness of the separator is preferably smaller as long as the mechanical strength can be maintained, from the standpoint of increase in the volumetric energy density of a battery and decrease in internal resistance thereof. In general, a thickness of the separator is preferably about 5 to 200 $\mu$m, more preferably about 5 to 40 $\mu$m.

The separator preferably has a porous film comprising a thermoplastic resin. In a secondary battery, the separator is located between a positive electrode and a negative electrode. When an extraordinary current flows in the battery due to short-circuit between a positive electrode and a negative electrode, or the like, the separator preferably plays a role by which the current is blocked to prevent an overcurrent from flowing (to shutdown). The shutdown is achieved by shutting fine pores of the porous film of the separator when the temperature exceeds a usual use temperature. Even when the temperature in the battery rises to a certain high temperature after the shutdown, it is preferable that the separator maintain the shutdown state without being ruptured due to the temperature, in other words, have high heat resistance. This separator includes a porous film having a heat-resistant material such as a porous laminated film in which a heat-resistant porous layer and a porous film are stacked each other, preferably a porous laminated film in which a heat-resistant porous layer comprising a heat-resistant resin and a porous film comprising a thermoplastic resin are stacked each other. By using such a porous film having a heat-resistant material as a separator, the secondary battery of the present invention can be more successfully prevented from thermal film rupture. The heat-resistant porous layer can be stacked on both sides of the porous film.

<Porous Laminated Film Separator>

The separator composed of a porous laminated film is described below. A thickness of the separator is usually from 5 $\mu$m to 40 $\mu$m, preferably 20 $\mu$m or less. Assuming that a thickness of the heat-resistant porous layer is A ($\mu$m) and a thickness of the porous film is B ($\mu$m), the value of A/B is preferably from 0.1 to 1. Considering the ion permeability, the permeability of the separator is, in terms of Gurley permeability, preferably from 50 to 300 seconds/100 ml, more preferably from 50 to 200 seconds/100 ml. A void content of the separator is usually from 30 to 80 vol%, and preferably from 40 to 70 vol%.

(Heat-Resistant Porous Layer)

In the porous laminated film, the heat-resistant porous layer preferably comprises a heat-resistant resin. In order to elevate the ion permeability, a thickness of the heat-resistant porous layer is preferably from 1 $\mu$m to 10 $\mu$m, more preferably from 1 $\mu$m to 5 $\mu$m, and particularly preferably from 1 $\mu$m to 4 $\mu$m to be a thinner heat-resistant porous layer. The heat-resistant porous layer has fine pores, and the size (diameter) of the pore is usually 3 $\mu$m or less, preferably 1 $\mu$m or less. The heat-resistant porous layer may comprise a filler described later. The heat-resistant porous layer may be formed from an inorganic powder.

The heat-resistant resin comprised in the heat-resistant porous layer includes polyamide, polyimide, polyamideimide, polycarbonate, polyacetal, polysulfone, polyphenylene sulfide, polyether ketone, aromatic polyester, polyethersulfone and polyetherimide. From the standpoint of further enhancing the heat resistance, polyamide, polyimide, polyamideimide, polyethersulfone and polyetherimide are preferred; and polyamide, polyimide and polyamideimide are more preferred. The heat-resistant resin is more preferably a nitrogen-containing aromatic polymer, such as aromatic polyamide (para-oriented aromatic polyamide, meta-oriented aromatic polyamide), aromatic polyimide and aromatic polyamideimide, still more preferably an aromatic polyamide, and yet still more preferably a par-oriented aromatic polyamide (hereinafter, referred to as "paras-aramide"). In addition, the heat-resistant resin also includes poly-4-methylpentene-1, and a cyclic olefin-based polymer. By using such a heat-resistant resin, the heat resistance can be enhanced, i.e. the thermal film rupture temperature can be raised.

The thermal film rupture temperature depends on the types of beat-resistant resin, and is selected and used on the basis of the situation and the purpose of the use thereof. The thermal film rupture temperature is usually 160°C or more. The thermal film rupture temperature can be controlled to about 400°C in the case of using the above-described nitrogen-containing aromatic polymer, to about 250°C in the case of using poly-4-methylpentene-1, and to about 300°C in the case of using a cyclic olefin-based polymer, as the heat-resistant resin, respectively. The thermal film rupture temperature can be controlled to, for example, 500°C or more in the case of using a heat-resistant porous layer formed from an inorganic powder.

The para-aramide is obtained by condensation polymerization of a para-oriented aromatic diamine and a para-oriented aromatic dicarboxylic acid halide, and is substantially composed of a repeating unit where the amide bond is bonded at the para-position or equivalently oriented position of the aromatic ring (for example, the oriented position extending coaxially or in parallel to the opposite direction, such as 4,4'-biphenylene, 1,5-naphthalene, and 2,6-naphthalene). The para-aramide includes a para-aramide having a para-oriented-type and quasi-para-oriented-type structures. Specific examples thereof include poly(paraphenyleneterephthalamide), poly(parabenzamide), poly(4,4'-benzanilideterephthalamide), poly(paraphenylene-4,4'-biphenylenedicarboxylic acid amide), poly(paraphenylene-2,6-naphthalenedicarboxylic acid amide), poly(2-chloro-paraphenyleneterephthalamide), and paraphenyleneterephthalamide/2,6-dichloroparaphenyleneterephthalamide copolymer.

The aromatic polyimide, is preferably a wholly aromatic polyimide produced by condensation polymerization of an aromatic diacid anhydride and an aromatic diamine. Specific examples of the diacid anhydride include pyromellitic dianhydride, 3,3',4,4'-diphenylsulfonetetracarboxylic dianhydride, 3,3',4,4'-benzophenonetetracarboxylic dianhydride, 2,2'-bis(3,4-dicarboxyphenyl)hexafluoropropane, and 3,3',4,4'-biphenyltetracarboxylic dianhydride. Examples of the diamine include oxydianiline, para-phenylenediamine, benzophenonediamine, 3,3'-methylenedianiline, 3,3'-diaminobenzophenone, 3,3'-diaminodiphenylsulfone, and 1,5'-naphthalenediamine. A polyimide soluble in a solvent may be suitably used. Examples of such a polyimide include a polyimide as a polycondensate of 3,3',4,4'-diphenylsulfonetetracarboxylic dianhydride with an aromatic diamine.

Examples of the aromatic polyamideimide include those obtained by condensation polymerization of an aromatic dicarboxylic acid and an aromatic diisocyanate, and those obtained by condensation polymerization of an aromatic diacid anhydride and an aromatic diisocyanate. Specific examples of the aromatic dicarboxylic acid include isophthalic acid and terephthalic acid. Specific examples of the aromatic diacid anhydride include trimellitic anhydride. Specific examples of the aromatic diisocyanate include 4,4'-diphenylmethane diisocyanate, 2,4-tolylene diisocyanate, 2,6-tolylene diisocyanate, ortho-tolylene diisocyanate and m-xylylene diisocyanate.

When the heat-resistant porous layer comprises a heat-resistant resin, the heat-resistant porous layer may comprises one or more types of fillers. The filler that may be contained in the heat-resistant porous layer may be any one selected from an organic powder, an inorganic powder and a mixture thereof. The average particle diameter of the particle constituting the filler is preferably from 0.01 $\mu$m to 1 $\mu$m. Examples of the shape of the filler include an approximately spherical shape, a plate shape, a columnar shape, an acicular particle, a whisker shape and a fibrous shape, and any particles of these shapes may be used. The filler is preferably an approximately spherical particle due to ease in forming uniform pores. The approximately spherical particles include particles having an aspect ratio (longer diameter of particle/shorter diameter of particle) in the range of from 1 to 1.5. The aspect ratio of particles can be determined using an electron microscope.

The organic powder as the filler includes a powder composed of an organic material, such as a homopolymer of or a copolymer of two or more kinds of styrene, vinyl ketone, acrylonitrile, methyl methacrylate, ethyl methacrylate, glycidyl methacrylate, glycidyl acrylate and methyl acrylate; a fluororesin, such as polytetrafluoroethylene, tetrafluoroethylene-hexafluoropropylene copolymer, tetrafluoroethylene-ethylene copolymer and polyvinylidene fluoride; a melamine resin; a urea resin; a polyolefin; and polymethacrylate. The organic powders may be used solely, or in admixture of two or more. Among the organic powders, a polytetrafluoroethylene powder is preferred in view of chemical stability.

Examples of the inorganic powder as the filler include a powder composed of an inorganic material, such as metal oxide, metal nitride, metal carbide, metal hydroxide, carbonate and sulfate. Among those, a powder composed of an inorganic material having a small conductivity can be preferably used. Specific examples thereof include a powder composed of alumina, silica, titanium dioxide, barium sulfate, or calcium carbonate. The inorganic powders may be used solely, or in admixture of two or more. Among the inorganic powders, an alumina powder is preferred in view of chemical stability. It is preferred that all of the particles constituting the filler be an alumina particles, and more preferred that all of the particles constituting filler be an alumina particle, and a part or all thereof are an approximately spherical alumina particle. Incidentally, when the heat-resistant porous layer is formed from an inorganic powder, the above inorganic powder can be used, optionally along with a binder if required.

When the heat-resistant porous layer comprises a heat-resistant resin, the content of the filler in the heat-resistant porous layer varies depending on the specific gravity of the material of the filler. For example, in the case where all of the particles constituting the filler are alumina particles, the weight of the filler is usually from 5 to 95 parts by weight, preferably from 20 to 95 parts by weight, and more preferably from 30 to 90 parts by weight, assuming that the total weight of the heat-resistant porous layer is 100 parts by weight. These ranges can be appropriately set, depending on the specific gravity of the material of the filler.

(Porous Film)

In the porous laminated film, the porous film preferably has fine pores, and can shutdown. In this case, the porous film comprises a thermoplastic resin. A thickness of the porous film is usually from 3 to 30 $\mu$m, preferably from

3 to 25 $\mu$m. The porous film has fine pores similarly to the heat-resistant porous layer, and the size of the pore is usually 3 $\mu$m or less, preferably 1 $\mu$m or less. A void content of the porous film is usually from 30 to 80 vol%, preferably from 40 to 70 vol%. When a temperature of nonaqueous electrolyte secondary battery exceeds a usual use temperature, the porous film can shut the fine pores due to softening of the thermoplastic resin constituting the porous film.

The thermoplastic resin contained in the porous film includes a resin that is softened at from 80 to 180°C, and a thermoplastic resin which does not dissolve in the electrolytic solution of a nonaqueous electrolyte secondary battery may be selected. Specific examples of the thermoplastic resin include a polyolefin resin, such as polyethylene and polypropylene, and a thermoplastic polyurethane resin. A mixture of two or more of these resins may be used. In order to perform a shutdown by softening at a lower temperature, the thermoplastic resin preferably comprises polyethylene. The polyethylene specifically includes a polyethylene, such as a low-density polyethylene, a high-density polyethylene and a linear polyethylene, and also includes an ultrahigh molecular-weight polyethylene having a molecular weight of one million or more. For further enhancing the piercing strength of the porous film, the thermoplastic resin preferably comprises at least an ultrahigh molecular-weight polyethylene. In view of production of the porous film, it is sometimes preferred that the thermoplastic resin comprise a wax composed of a polyolefin of low molecular-weight (weight average molecular weight of 10,000 or less).

The examples of a porous film comprising a heat-resistant material which differs from that of the above-described porous laminated film include a porous film formed from a heat-resistant resin and/or an inorganic powder, and a porous film in which a heat-resistant resin and/or an inorganic powder is dispersed in a thermoplastic resin film of polyolefin resin, thermoplastic polyurethane resin or the like. The heat-resistant resin and the inorganic powder include ones described above.

<Production Method of Sodium Secondary Battery>

When a sodium secondary battery of the present invention has a separator, the sodium secondary battery can be produced, for example, by stacking the positive electrode above, a separator, and a negative electrode, in this order; winding the stack to yield an electrode group; housing the electrode group in a battery can; and then impregnating the electrode group with an electrolytic solution composed of an organic solvent comprising an electrolyte. When a sodium secondary battery of the present invention does not have a separator, the sodium secondary battery can be produced, for example, by stacking the positive electrode, a solid electrolyte, and a negative electrode, in this order; winding the stack to yield an electrode group; and then housing the electrode group in a battery can.

Examples of the shape of the electrode group include a shape that gives a cross section of a circular shape, an elliptical shape, an oval shape, a rectangular shape, a corner-rounded rectangular shape or the like, when the electrode group is cut in the direction perpendicular to the winding axis. Examples of the shape of the battery include a paper shape, a coin shape, a cylinder shape, and a square shape.

The sodium secondary battery obtained as described above, as compared with conventional techniques, has a larger discharge capacity maintenance rate when having repeated a charge and discharge and superior cycling performance, can be reduced in the formation of sodium dendrite on the negative electrode surface, and ensures superior stability as a battery.

EXAMPLES

The present invention is described in greater detail below, but the present invention is not limited thereto.

Production Example 1:

Sodium carbonate ($Na_2CO_3$, produced by Wako Pure Chemical Industries, Ltd., purity: 99.8%), manganese (IV) oxide ($MnO_2$, produced by Kojundo Chemical Laboratory Co., Ltd., purity: 99.9%) and tricobalt tetraoxide ($Co_3O_4$, produced by Seido Chemical Industry Co., Ltd. purity: 99%), as metal-containing compounds, were weighed to obtain an Na:Mn:Co molar ratio of 0.7:0.5:0.5, and mixed in a dry ball mill over 4 hours to obtain a mixture of the metal-containing compounds. The obtained mixture of the metal-containing compounds was filled in an alumina boat, heated in an air atmosphere by using an electric furnace, and kept at 800°C over 2 hours to obtain Mixed Metal Oxide E1. Mixed Metal Oxide E1, an acetylene black (produced by Denki Kagaku Kogyo Kabushiki Kaisha) as an electrically conductive material, and PVDF (PolyVinylidene DiFluoride Polyflon, produced by Kureha Corporation) as a binder were weighed to obtain a composition of Mixed Metal Oxide E1 : electrically conductive material : binder = 85:10:5 (by weight). Thereafter, the mixed metal oxide and acetylene black were thoroughly mixed in an agate mortar, an appropriate amount of N-methyl-2-pyrrolidone (NMP, produced by Tokyo Chemical Industry Co., Ltd.) was added to the mixture, PVDF was further added thereto, and these were then uniformly mixed to form a slurry. The obtained slurry was applied on a 40 $\mu$m-thick aluminum foil as a current collector by using an applicator to a thickness of 100 $\mu$m of the slurry, and the aluminum foil having the applied slurry was placed in a drier and thoroughly dried while removing NMP to yield Positive Electrode Sheet 1. Positive Electrode Sheet 1 was punched with a diameter of 1.5 cm by an electrode punch, and sufficiently fixed under pressure by a hand press to yield Positive Electrode 1.

Comparative Example 1:

Positive Electrode 1 obtained in Production Example 1 was placed in a recess of the bottom part of a coin cell (manufactured by Hohsen Corp.) by arranging the aluminum foil to face downward, and combined with a 1M $NaClO_4$/ propylene carbonate as a nonaqueous electrolyte, a polypropylene porous film (thickness: 20 $\mu$m) as a separator, and a metal sodium (produced by Aldrich Chemical Company, Inc.) as a negative electrode to produce Sodium Secondary Battery 1. Assembling of the test battery was performed in a glove box under an argon atmosphere.
Using Sodium Secondary Battery 1, a constant current charge/discharge test was performed under the following conditions.

Charge/Discharge Conditions:

The charge was performed by CC (constant current) charge at a 0.1 C rate (a rate that requires 10 hours for full charge) up to 4.0 V. The discharge was performed by CC discharge at the same rate as the charge rate, and the current was cut off at a voltage of 1.5 V. Charge and discharge for the next and subsequent cycles was performed at the same rate as the charge rate above, and the current was cut off at a charge voltage of 4.0 V and a discharge voltage of 1.5 V similarly to the 1st cycle.
As a result of a constant current charge/discharge test of Sodium Secondary Battery 1, the discharge capacity for 10th cycle based on the discharge capacity for 2nd cycle (discharge capacity maintenance rate) was as low as 80%.

Example 1:

(1) Production of Carbon aceous Material

Into a four-neck flask, 200 g of resorcinol, 1.5 L of methyl alcohol and 194 g of benzaldehyde were charged under a nitrogen stream, followed by ice-cooling, and 36.8 g of 36% hydrochloric acid was added dropwise with stirring. After the completion of dropwise addition, the temperature was raised to 65°C, and kept at the same temperature for 5 hours. To the obtained polymerization reaction mixture, 1 L of water was added, and the precipitate was collected by filtration, washed with water until the filtrate became neutral, and dried to yield 294 g of tetraphenylcalix[4]resorcinarene (PCRA) that is an organic polymer compound.
PCRA was placed in a rotary kiln, heated at 300°C for 1 hour with the atmosphere being set to an air atmosphere, further heated at 1,000°C for 4 hours with the atmosphere in the rotary kiln being replaced with argon, and then pulverized in a ball mill (agate-made ball, 28 rpm, 5 minutes) to yield Carbonaceous Material Cl that is a calcined organic polymer compound. No contact with a metal means that this powdery Carbonaceous Material Cl is almost free of a metal including a metal ion.

(2) Production of Negative Electrode

Carbonaceous Material Cl and polyvinylidene fluoride (PVDF) as a binder were weighed to obtain a composition of Carbonaceous Material C1:binder = 95:5 (by weight), and a slurry formed by dissolving the binder in N-methylpyrrolidone (NMP) and then adding Carbonaceous Material Cl thereto was applied on a 10 $\mu$m-thick copper foil as a current collector by using an applicator to a thickness of 100 $\mu$m of the slurry. The copper foil having the applied slurry was placed in a drier and thoroughly dried while removing NMP to yield a negative electrode sheet. This negative electrode sheet was punched with a diameter of 1.5 cm by an electrode punch, and sufficiently fixed under pressure by a hand press to yield Negative Electrode 1.

(3) Production of Sodium Secondary Battery

Positive Electrode 1 obtained in Production Example 1 was placed in a recess of the bottom part of a coin cell (manufactured by Hohsen Corp.) by arranging the aluminum foil to face downward, and combined with a 1 M $NaClO_4$/ propylene carbonate as a nonaqueous electrolyte, a polypropylene porous film (thickness: 20 $\mu$m) as a separator, and Negative Electrode 1 to produce Sodium Secondary Battery 2. Assembling of the test battery was performed in a glove box under an argon atmosphere.
Using Sodium Secondary Battery 2, a constant current charge/discharge test was performed under the same conditions as in Comparative Example 1. As a result of a constant current charge/discharge test of Sodium Secondary Battery 2, the discharge capacity for 10th cycle based on the discharge capacity for 2nd cycle (discharge capacity maintenance rate) was as very high as 107% and was a value exceeding 100%. Even when charge/discharge of Sodium Secondary Battery 2 was repeated for further cycles, the similar effects as in the case of the later-described Sodium Secondary Battery 4 can be obtained. Even when charge/discharge of Sodium Secondary Battery 2 was repeated for further cycles, the similar effects as in the case of the later-described Sodium Secondary Battery 4 can be obtained.

Example 2:

(1) Production of Positive Electrode

Sodium carbonate ($Na_2CO_3$, produced by Wako Pure Chemical Industries, Ltd., purity: 99.8%), manganese (IV) oxide ($MnO_2$, produced by Kojundo Chemical Laboratory Co., Ltd., purity: 99.9%), iron(II, III) oxide ($Fe_3O_4$, produced by Kojundo Chemical Laboratory Co., Ltd., purity: 99%) and nickel(II) oxide (NiO, produced by Kojundo Chemical Laboratory Co., Ltd., purity: 99%), as metal-containing compounds, were weighed to obtain an Na:Mn:Fe:Ni molar ratio of 0.7:0.333:0.333:0.333, and mixed in a dry ball mill over 4 hours to obtain a mixture of the metal-containing compounds. The obtained mixture of the metal-containing compounds was filled in an alumina boat, heated in an air atmosphere by using an electric furnace, and kept at 800°C over 2 hours to obtain Mixed Metal Oxide E2. Mixed Metal Oxide E2, an acetylene black (produced by Denki Kagaku Kogyo Kabushiki Kaisha) as an electrically conductive material, and PVDF (PolyVinylidene DiFluoride Polyflon, produced by Kureha Corporation) as a binder were weighed to obtain a composition of Mixed Metal Oxide E2 : electrically conductive material : binder = 85:10:5 (by weight). Thereafter, the mixed metal oxide and acetylene black were thoroughly mixed in an agate mortar, an appropriate amount of N-methyl-2-pyrrolidone (NMP, produced by Tokyo Chemical Industry Co., Ltd.) was added to the mixture, PVDF was further added thereto, and these were then uniformly mixed to form a slurry. The obtained slurry was applied on a 40 μm-thick aluminum foil as a current collector by using an applicator to a thickness of 100 μm of the slurry, and the aluminum foil having the applied slurry was placed in a drier and thoroughly dried while removing NMP to yield Positive Electrode Sheet 2. Positive Electrode Sheet 2 was punched with a diameter of 1.5 cm by an electrode punch, and sufficiently fixed under pressure by a hand press to yield Positive Electrode 2.

(2) Production of Sodium Secondary Battery

Positive Electrode 2 was placed in a recess of the bottom part of a coin cell (manufactured by Hohsen Corp.) by arranging the aluminum foil to face downward, and combined with a 1 M $NaClO_4$/propylene carbonate as a nonaqueous electrolyte, a polypropylene porous film (thickness: 20 μm) as a separator, and the same Negative Electrode 1 as in Example 1 to produce Sodium Secondary Battery 3. Assembling of the test battery was performed in a glove box under an argon atmosphere.
Using Sodium Secondary Battery 3, a constant current charge/discharge test was performed under the same conditions as in Comparative Example 1. As a result of a constant current charge/discharge test of Sodium Secondary Battery 3, the discharge capacity for 10th cycle based on the discharge capacity for 2nd cycle (discharge capacity maintenance rate) was 111%, and when a constant current charge/discharge test was performed for further 10 cycles (from 11th to 20th cycles), the discharge capacity for 20th cycle based on the discharge capacity for 2nd cycle (discharge capacity maintenance rate) was 115%. Thus, in both cases, the discharge capacity maintenance rate was as a very high as exceeding 100%. Even when charge/discharge of Sodium Secondary Battery 3 was repeated for further cycles, the similar effects as in the case of the later-described Sodium Secondary Battery 4 can be obtained.

Example 3:

(1) Production of Negative Electrode

A calcined organic polymer compound as a carbonaceous material and polyvinylidene fluoride (PVDF) as a binder were weighed to obtain a composition of carbonaceous material: binder = 95:5 (by weight), and a slurry formed by dissolving the binder in N-methylpyrrolidone (NMP) and then adding the carbonaceous material thereto was applied on a 10 μm-thick copper foil as a current collector by using an applicator to a thickness of 100 μm of the slurry. The copper foil having the applied slurry was placed in a drier and thoroughly dried while removing NMP to yield a negative electrode sheet. This negative electrode sheet was punched with a diameter of 1.5 cm by an electrode punch, and sufficiently fixed under pressure by a hand press to yield Negative Electrode 2.

(2) Production of Sodium Secondary Battery

The same Positive Electrode 2 as in Example 2 was placed in a recess of the bottom part of a coin cell (manufactured by Hohsen Corp.) by arranging the aluminum foil to face downward, and combined with a 1 M NaClO$_4$/ propylene carbonate as a nonaqueous electrolyte, a polypropylene porous film (thickness: 20 $\mu$m) as a separator, and Negative Electrode 2 to produce Sodium Secondary Battery 4. Assembling of the test battery was performed in a glove box under an argon atmosphere.

Using Sodium Secondary Battery 4, a constant current charge/discharge test was performed under the same conditions as in Comparative Example 1. As a result of a constant current charge/discharge test of Sodium Secondary Battery 4, the discharge capacity for 10th cycle based on the discharge capacity for 2nd cycle (discharge capacity maintenance rate) was as very high as 108%, and when a constant current charge/discharge test was performed for further 10 cycles (from 11th to 20th cycles), the discharge capacity for 20th cycle based on the discharge capacity for 2nd cycle (discharge capacity maintenance rate) was 107%. Thus, in both cases, the discharge capacity maintenance rate was as a very high as exceeding 100%.

Furthermore, Sodium Secondary Battery 4 subjected to the constant current charge/discharge cycle 20 times was further subjected to an accelerated charge/discharge test (from 21st to 500th cycles) under the following conditions.

Accelerated Charge/Discharge Test Conditions:

The charge was performed by CC charge at a 1.0 C rate (a rate that requires 1 hour for full charge) up to 4.0 V. The discharge was performed by CC discharge at the same rate as the charge rate, and the current was cut off at a voltage of 1.5 V. After repeating this 1.0 C rate constant current charge/discharge test 19 times, a 0.1 C rate constant current charge/discharge test of performing CC charge at 0.1 C rate (a rate that requires 10 hours for full charge) up to 4.0 V, and performing CC discharge at the same rate as the charge rate to the cutting-off voltage of 1.5 V was performed once. A constant current charge/discharge test of performing 20 cycles of constant current charge/discharge in total, that is, 19 cycles of 1.0 C rate constant current charge/discharge, and 1 cycle of 0.1 C rate constant current charge/ discharge, was repeated 24 times (480 cycles in total) to perform an accelerated charge/discharge test.

Sodium Secondary Battery 4 subjected to the 20 cycles of constant current charge/discharge was further subjected to the accelerated charge/discharge test above. As a result, the discharge capacity for 500th cycle based on the discharge capacity for 2nd cycle (discharge capacity maintenance rate) was 96%, and was a very high value.

With respect to Sodium Secondary Battery 4 subjected to 500 cycles of constant current charge/discharge, the constant current charge/discharge test comprising 20 cycles of constant current charge/discharge in total, that is, 19 cycles of 1.0 C rate constant current charge/discharge, and 1 cycle of 0.1 C rate constant current charge/discharge, was further repeated 25 times (500 cycles in total) to perform an accelerated charge/discharge test. As a result, the discharge capacity for 1,000th cycle based on the discharge capacity for 2nd cycle (discharge capacity maintenance rate) was 80%, and was a very high value.

Example 4:

(1) Production of Positive Electrode

Sodium carbonate (Na$_2$CO$_3$, produced by Wako Pure Chemical Industries, Ltd., purity: 99.8%), manganese (IV) oxide (MnO$_2$, produced by Kojundo Chemical Laboratory Co., Ltd., purity: 99.9%), iron(II, III) oxide (Fe$_3$O$_4$, produced by Kojundo Chemical Laboratory Co., Ltd., purity: 99%) and nickel(II) oxide (NiO, produced by Kojundo Chemical Laboratory Co., Ltd., purity: 99%), as metal-containing compounds, were weighed to obtain an Na:Mn:Fe:Ni molar ratio of 0.8:0.333:0.333:0.333, and mixed in a dry ball mill over 4 hours to obtain a mixture of the metal-containing compounds. The obtained mixture of the metal-containing compounds was filled in an alumina boat, heated in an air atmosphere by using an electric furnace, and kept at 800°C over 2 hours to obtain Mixed Metal Oxide E3. Mixed Metal Oxide E3, an acetylene black (produced by Denki Kagaku Kogyo Kabushiki Kaisha) as an electrically conductive material, and PVDF (PolyVinylidene DiFluoride Polyflon, produced by Kureha Corporation) as a binder were weighed to obtain a composition of Mixed Metal Oxide E3 : electrically conductive material : binder = 85:10:5 (by weight). Thereafter, the mixed metal oxide and acetylene black were thoroughly mixed in an agate mortar, an appropriate amount of N-methyl-2-pyrrolidone (NMP, produced by Tokyo Chemical Industry Co., Ltd.) was added to the mixture, PVDF was further added thereto, and these were then uniformly mixed to form a slurry. The obtained slurry was applied on a 40 $\mu$m-thick aluminum foil as a current collector by using an applicator to a thickness of 100 $\mu$m of the slurry, and the aluminum foil having the applied slurry was placed in a drier and thoroughly dried while removing NMP to yield Positive Electrode Sheet 3. Positive Electrode Sheet 3 was punched with a diameter of 1.5 cm by an electrode punch, and sufficiently fixed under pressure by a hand press to obtain Positive Electrode 3.

(2) Production of Sodium Secondary Battery

Positive Electrode 3 was placed in a recess of the bottom part of a coin cell (manufactured by Hohsen Corp.) by arranging the aluminum foil to face downward, and combined with a 1 M $NaClO_4$/propylene carbonate as a nonaqueous electrolyte, a polypropylene porous film (thickness: 20 $\mu$m) as a separator, and the same Negative Electrode 2 as in Example 3 to produce Sodium Secondary Battery 5. Assembling of the test battery was performed in a glove box under an argon atmosphere.

Using Sodium Secondary Battery 5, a constant current charge/discharge test was performed under the same conditions as in Comparative Example 1. As a result of a constant current charge/discharge test of Sodium Secondary Battery 5, the discharge capacity for 10th cycle based on the discharge capacity for 2nd cycle (discharge capacity maintenance rate) was as very high as 105%, and was a value exceeding 100%. Even when charge/discharge of Sodium Secondary Battery 5 was repeated for further cycles, the similar effects as in the case of Sodium Secondary Battery 4 can be obtained.

Example 5:

(1) Production of Positive Electrode

Mixed Metal Oxide E4 of Example 5 was obtained in the same manner as in Example 4 except for using metal-containing compounds in amounts of obtaining an Na:Mn:Fe:Ni molar ratio of 0.9:0.333:0.333:0.333. Positive Electrode Sheet 4 was obtained in the same manner as in Example 4 by using Mixed Metal Oxide E4 of Examples 5 as the positive electrode active material for a sodium secondary buttery. Positive Electrode Sheet 4 was punched with a diameter of 1.5 cm by an electrode punch, and sufficiently fixed under pressure by a hand press to obtain Positive Electrode 4.

(2) Production of Sodium Secondary Battery

Sodium Secondary Battery 6 was produced in the same manner as in Example 4 by using Positive Electrode 4 of Example 5. Assembling of the test battery was performed in a glove box under an argon atmosphere.

Using Sodium Secondary Battery 6, a constant current charge/discharge test was performed under the same conditions as in Comparative Example 1. As a result of a constant current charge/discharge test of Sodium Secondary Battery 6, the discharge capacity for 10th cycle based on the discharge capacity for 2nd cycle (discharge capacity maintenance rate) was as very high as 105%, and was a value exceeding 100%. Even when charge/discharge of Sodium Secondary Battery 5 was repeated for further cycles, the similar effects as in the case of Sodium Secondary Battery 4 can be obtained.

Production Example 2 (Production of Porous Laminated film):

(1) Production of Slurry of Applying Heat-Resistant Porous Layer

After dissolving 272.7 g of calcium chloride in 4,200 g of NMP, 132.9 g of para-phenylenediamine was added and completely dissolved therein. To the obtained solution, 243.3 g of terephthalic acid dichloride was gradually added to effect the polymerization, and thereby obtain a para-aramide. The obtained solution was further diluted with NMP to obtain a para-aramide solution having a concentration of 2.0 wt%. To 100 g of the obtained para-aramide solution, 2 g of a first alumina powder (Alumina C, produced by Nippon Aerosil Co., Ltd., average particle diameter: 0.02 $\mu$m) and 2 g of a second alumina powder (Sumicorundum AA03, produced by Sumitomo Chemical Co., Ltd., average particle diameter: 0.3 $\mu$m), as a filler in total of 4 g, were added and mixed. The resulting mixture was subjected to a nanomizer three times, filtered with a 1,000-mesh metal screen, and defoamed under reduced pressure to produce a slurry of applying for heat-resistant porous layer. The amount of the alumina powder (filler) was 67 wt%, based on the total weight of the para-aramide and alumina powder.

(2) Production of Porous Laminated Film

As for a porous film, a polyethylene porous film (film thickness of 12 $\mu$m, air permeability of 140 seconds/100 ml, average pore diameter of 0.1 $\mu$m, void content of 50%) was used. The polyethylene porous film above was fixed on a 100 $\mu$m-thick PET film, and the slurry of applying for heat-resistant porous layer was applied on the porous film by a bar coater manufactured by Tester Sangyo Co,. Ltd. The coated porous film on the PET film was, while maintaining the integrity, dipped in water, which is a poor solvent, to precipitate a para-aramide porous film (heat-resistant porous layer). After that, the solvent was dried and the PET film was removed to yield a porous laminated film in which a heat-resistant porous layer and a porous film were stacked each other. The thickness of the porous laminate film was 16 $\mu$m, and the thickness of the para-aramide porous layer (heat-resistant porous layer) was 4 $\mu$m. The air permeability of the porous laminate film was 180 seconds/100 ml, the void content was 50%. The cross-section of the heat-resistant porous layer in the porous laminated film was observed by a scanning electron microscope (SEM), as a result, the heat-resistant porous layer was found to have relatively small pores of approximately 0.03 $\mu$m to 0.06 $\mu$m and relatively large pores of approximately 0.1 $\mu$m to 1 $\mu$m. Evaluations of the porous laminated film were performed as in the following (A) to (C).

(A) Thickness Measurement

The thicknesses of the porous laminated film and the porous film were measured in accordance with JIS standards (K7130-1992). The thickness of the heat-resistant porous layer was determined by subtracting the thickness of the porous film from the thickness of the porous laminated film.

(B) Measurement of Air Permeability by Gurley Method

The air permeability of the porous laminated film was measured based on JIS P8117 by a digital-timer type Gurley densometer manufactured by Yasuda Seiki Seisakusho, Ltd.

(C) Void Content

The obtained porous laminated film sample was cut into a square shape which is 10 cm on each side, and the weight W (g) and the thickness D (cm) were measured. The weight (Wi (g)) of each layer in the sample was determined, the volume of each layer was determined from Wi and the true specific gravity (true specific gravity i (g/cm$^3$)) of each layer, and the void content (vol%) was determined according to the following formula:

```
Void content (vol%) = 100×{1-(W1/true specific
gravity 1 + W2/true specific gravity 2 + ... + Wn/true
specific gravity n)/(10×10×D)}
```

When the porous laminated film obtained by Production Example is used as a separator in the sodium secondary batteries of the above Examples, the sodium secondary batteries can more successfully prevent thermal film rupture.

**Claims**

1. A sodium secondary battery comprising:

    a positive electrode comprising a mixed metal oxide which comprises Na and M$^1$ wherein M$^1$ represents two or more elements selected from the group consisting of Mn, Fe, Co and Ni, with an Na:M$^1$ molar ratio being a: 1 wherein a is a value falling within the range of more than 0.5 and less than 1,
    a negative electrode comprising a carbonaceous material capable of storing and releasing Na ions, and
    an electrolyte.

2. The sodium secondary battery according to claim 1 further comprising a separator.

3. The sodium secondary battery according to claim 2, wherein the separator is a separator comprising a porous laminated film in which a heat-resistant porous layer comprising a heat-resistant resin and a porous film comprising a thermoplastic resin are stacked each other.

4. The sodium secondary battery according to any one of claims 1 to 3, wherein the mixed metal oxide is represented by the following formula (1):

    $$Na_aM^1O_2 \qquad (1)$$

wherein M$^1$ and a each have the same meaning as above.

5. The sodium secondary battery according to any one of claims 1 to 4, wherein $M^1$ comprises at least Mn.

6. The sodium secondary battery according to claims 1 to 5, wherein $M^1$ represents Mn and Co.

7. The sodium secondary battery according to any one of claims 1 to 6, wherein a is a value falling within the range of from 0.6 to 0.9.

# Fig.1

# EP 2 242 132 A1

<div align="center">

**INTERNATIONAL SEARCH REPORT**

</div>

| International application No. |
| --- |
| PCT/JP2009/051799 |

**A. CLASSIFICATION OF SUBJECT MATTER**
*H01M4/50*(2006.01)i, *H01M2/16*(2006.01)i, *H01M4/52*(2006.01)i, *H01M10/40* (2006.01)i

According to International Patent Classification (IPC) or to both national classification and IPC

**B. FIELDS SEARCHED**

Minimum documentation searched (classification system followed by classification symbols)
H01M4/00-4/62, H01M2/14-2/18, H01M10/36-10/40, C01G53/00

Documentation searched other than minimum documentation to the extent that such documents are included in the fields searched
Jitsuyo Shinan Koho          1922-1996     Jitsuyo Shinan Toroku Koho     1996-2009
Kokai Jitsuyo Shinan Koho     1971-2009     Toroku Jitsuyo Shinan Koho     1994-2009

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2007-287661 A  (Sanyo Electric Co., Ltd.), 01 November, 2007 (01.11.07), Claim 2; Par. Nos. [0065], [0069], [0077] to [0087] & US 2007/0218361 A1     & CN 101043093 A | 1-7 |
| Y | JP 2006-179473 A  (Kyushu University, Sumitomo Chemical Co., Ltd.), 06 July, 2006 (06.07.06), Par. No. [0027] & EP 1826845 A1          & WO 2006/057307 A1 & KR 10-2007-0085461 A  & CN 101065867 A | 1-7 |
| Y | JP 2007-234512 A  (Sanyo Electric Co., Ltd.), 13 September, 2007 (13.09.07), Claim 1; Par. No. [0022] (Family: none) | 1-7 |

☒ Further documents are listed in the continuation of Box C.        ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 10 April, 2009 (10.04.09) | 21 April, 2009 (21.04.09) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

**INTERNATIONAL SEARCH REPORT**

| International application No. |
|---|
| PCT/JP2009/051799 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2007-35588 A  (Sanyo Electric Co., Ltd.), 08 February, 2007 (08.02.07), Claim 1 (Family: none) | 1-7 |
| Y | JP 2000-30686 A  (Sumitomo Chemical Co., Ltd.), 28 January, 2000 (28.01.00), Claims 2, 4, 5 & US 6447958 B1        & DE 19918856 A & TW 460505 B          & CA 2269892 A & CA 2269892 A1 | 3 |
| Y | JP 2007-188703 A  (Matsushita Electric Industrial Co., Ltd.), 26 July, 2007 (26.07.07), Par. No. [0048] (Family: none) | 3 |
| Y | JP 2007-299612 A  (Matsushita Electric Industrial Co., Ltd., Sumitomo Chemical Co., Ltd.), 15 November, 2007 (15.11.07), Claims 1, 2 & WO 2007/125827 A1     & KR 10-2008-0086437 A | 3 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007287661 A
- JP 2007039313 A
- JP 2000030686 A
- JP 10324758 A